# EUROPEAN PATENT APPLICATION

(11) **EP 4 528 477 A1**
(43) Date of publication of application: **26.03.2025**
(21) Application number: 24202513.8
(22) Date of filing: 25.09.2024
(51) Int. Cl.: G06F 7/485, G06F 7/509

(54) **ACCELERATOR CONFIGURED TO PERFORM ACCUMULATION ON DATA HAVING FLOATING POINT TYPE AND OPERATION METHOD THEREOF**

(30) Priority: 25.09.2023 KR 20230128232; 29.08.2024 US 202418818742
(71) Applicant: Samsung Electronics Co., Ltd., Suwon-si, Gyeonggi-do 16677 (KR); Naver Corporation, Seongnam-si, Gyeonggi-do 13561 (KR)
(72) Inventor: JANG, Jae Hun, 16677 Suwon-si (KR); SON, Hong Rak, 16677 Suwon-si (KR); SHIN, Dong-Min, 16677 Suwon-si (KR); YOON, JongYoon, 16677 Suwon-si (KR); JEON, Younho, 16677 Suwon-si (KR); KWON, Sejung, 13561 Seongnam-si (KR); KIM, Byeoungwook, 13561 Seongnam-si (KR); PARK, Baeseong, 13561 Seongnam-si (KR); SEO, Mankeun, 16677 Suwon-si (KR); AHN, Byungmin, 16677 Suwon-si (KR); LEE, Dongsoo, 13561 Seongnam-si (KR)
(74) Representative: Marks & Clerk LLP

(57) **Abstract**

Disclosed is an accelerator performing an accumulation operation on a plurality of data, each being a floating point type. A method of operating the accelerator includes loading first data, finding a first exponent, which is a maximum value among exponents of the first data, generating aligned first fractions by performing a bit shift on first fractions of the first data based on the first exponent, and generating a first accumulated value by an accumulation operation on the aligned first fractions, loading second data, finding a second exponent, which is a maximum value among exponents of the second data, and generating a first aligned accumulated value by a bit shift on the first accumulated value, generating aligned second fractions by a bit shift on second fractions of the second data, and generating a second accumulated value by an accumulation operation on the aligned second fractions and the first aligned accumulated value.

## Description

### BACKGROUND

Embodiments of the present disclosure described herein relate to artificial intelligence systems, and more particularly, relate to accelerators capable of performing an accumulation operation on floating point type data and a method of operating the same.

Artificial intelligence (AI) is a field of computer science that artificially implements various human abilities such as learning, inference, and perception. Recently, artificial intelligence is being widely used in various fields such as understanding natural language, translating natural language, robotics, artificial vision, problem solving, learning, knowledge acquisition, and cognitive science.

Artificial intelligence is implemented based on various algorithms. As an example, a neural network is composed of a complex network in which nodes and synapses are repeatedly connected. In the process of moving data from a current node to a next node, various signal processing may occur depending on the corresponding synapse, and this signal processing process is referred to as a 'layer'. In detail, the neural network may include various layers that are complexly connected to each other. Since the various layers included in the neural network require a large amount of operations, various methods to optimize the operations are being studied.

### SUMMARY

Example embodiments of the present disclosure provide accelerators capable of performing an accumulation operation on floating point type data with improved reliability and improved performance, and methods of operating the accelerator.

According to some example embodiments of the present disclosure, a method of operating an accelerator for performing an accumulation operation on a plurality of data, includes loading at least two of first data among the plurality of data, finding a first exponent, which is a maximum value among exponents of the at least two of first data, generating aligned first fractions by performing a bit shift on first fractions of the at least two of first data based on the first exponent, and generating a first accumulated value by performing an accumulation operation on the aligned first fractions, loading at least two of second data among the plurality of data, finding a second exponent, which is a maximum value among exponents of the at least two of second data, and the second exponent being greater than the first exponent, and generating a first aligned accumulated value by performing a bit shift on the first accumulated value based on a difference between the second exponent and the first exponent, generating aligned second fractions by performing a bit shift on second fractions of the at least two of second data, and generating a second accumulated value by performing an accumulation operation on the aligned second fractions and the first aligned accumulated value, and each of the plurality of data is of a floating point type.

According to some example embodiments of the present disclosure, an accelerator performing an accumulation operation on a plurality of data includes a unified buffer unit that stores the plurality of data, a pre-alignment unit that loads at least two of first data among the plurality of data, finds a first maximum exponent, which is a maximum value among exponents of the at least two of first data, performs a bit shift on fractions of the at least two of first data based on the first maximum exponent and a previous maximum exponent to generate first aligned fractions, a plurality of processing elements that generate an aligned accumulated value by performing a bit shift on the previous accumulated value based on a previous maximum exponent and the first maximum exponent and performs an accumulation operation on the aligned accumulated value and the first fractions, and a normalization unit that generates an output value by normalizing operation results of the plurality of processing elements based on the first maximum exponent, and each of the plurality of data is of a floating point type.

According to some example embodiments of the present disclosure, a method of operating an accelerator configured to perform an accumulation operation on a plurality of data includes generating a Oth maximum exponent and a Oth accumulated value by performing the accumulation operation on at least two of data among the plurality of data, when a first exponent of first data among the plurality of data is greater than the Oth maximum exponent, performing a bit shift on the Oth accumulated value based on the first exponent and the Oth maximum exponent to generate a Oth aligned accumulated value, and generating a first accumulated value by performing an accumulation operation on a first fraction of the first data and the Oth aligned accumulated value, and each of the plurality of data is of a floating point type.

At least some of the above and other features of the invention are set out in the claims.

### BRIEF DESCRIPTION OF THE FIGURES

The above and other objects and features of the present disclosure will become apparent by describing in detail embodiments thereof with reference to the accompanying drawings.
FIG. 1 is a block diagram illustrating a system according to some example embodiments of the present disclosure.
FIGS. 2A and 2B are diagrams for describing a MAC operation performed by an accelerator of FIG. 1.
FIG. 3 is a flowchart illustrating an accelerator of FIG. 1.
FIG. 4 is a flowchart illustrating an operation of an accelerator of FIG. 3.
FIG. 5 is a block diagram illustrating a pre-alignment unit of FIG. 3.
FIG. 6 is a timing diagram for describing an artificial intelligence operation of an accelerator of FIG. 3.
FIG. 7 is a block diagram illustrating an accelerator of FIG. 1.
FIG. 8 is a flowchart illustrating an operation of an accelerator of FIG. 7.
FIG. 9 is a block diagram illustrating a pre-alignment unit of FIG. 7.
FIG. 10 is a diagram for describing a structure of a maximum exponent finder of FIG. 9.
FIG. 11 is a block diagram illustrating one of a plurality of processing elements of FIG. 7.
FIG. 12 is a timing diagram illustrating an operation of an accelerator of FIG. 7.
FIG. 13 is a diagram for describing an operation by an accelerator of FIG. 3.
FIGS. 14A to 14C are diagrams for describing an operation by an accelerator of FIG. 7.
FIG. 15 is a flowchart illustrating an operation of an accelerator of FIG. 1.
FIG. 16 is a block diagram illustrating a system according to some example embodiments of the present disclosure.

### DETAILED DESCRIPTION

Hereinafter, example embodiments of the present disclosure may be described in detail and clearly to such an extent that an ordinary one in the art easily implements the present disclosure.

The terms "unit", "module", etc. used in description or drawings in the specification or function blocks illustrated in drawings may be implemented in the form of software, hardware, or a combination thereof configured to perform specific functions.

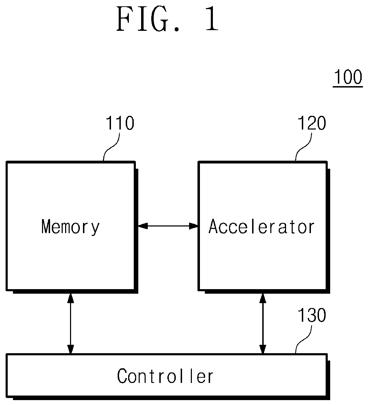

FIG. 1 is a block diagram illustrating a system according to some example embodiments of the present disclosure. Referring to FIG. 1, a system 100 may include a memory 110, an accelerator 120, and a controller 130. In some example embodiments, the system 100 may be dedicated hardware configured to perform processing of artificial intelligence models. For example, the system 100 may be a graphics processing unit (GPU), a neural processing unit (NPU), or separate dedicated hardware.

In some example embodiments, the artificial intelligence model driven by the system 100 may be created through machine learning. The machine learning may include supervised learning, unsupervised learning, semi-supervised learning, or reinforcement learning, but the scope of the present disclosure is not limited thereto.

In some example embodiments, the artificial intelligence model may be generated or trained through one or a combination of at least two of various neural networks such as a deep neural network (DNN), a convolutional neural network (CNN), a recurrent neural network (RNN), a restricted boltzmann machine (RBM), a deep belief network (DBN), a bidirectional recurrent deep neural network (BRDNN), a deep Q-networks, etc. The artificial intelligence model may include a plurality of neural network layers, and each of the plurality of neural network layers may be configured to perform an artificial intelligence operation based on a learned model or weight.

Hereinafter, to easily describe example embodiments of the present disclosure, the term "artificial intelligence operation" is used. The "artificial intelligence operation" may collectively refer to various operations performed within the system 100 in order for the system 100 to train an artificial intelligence model or to infer a certain result. As an example, the artificial intelligence operation may include multiply and accumulate (MAC) operations performed in various layers of the artificial intelligence model.

The memory 110 may be configured to store various data, weights, parameters, etc. required for the artificial intelligence operation of the system 100. In some example embodiments, the memory 110 may be a dynamic random access memory (DRAM). However, the scope of the present disclosure is not limited thereto, and the memory 110 may include various types of memories such as an SRAM, a PRAM, an MRAM, an RRAM, an FRAM, a flash memory, etc.

The accelerator 120 may be configured to perform the artificial intelligence operation using data, weights, or parameters stored in the memory 110. In some example embodiments, the accelerator 120 may include a plurality of processing elements Pes for the artificial intelligence operation. Each of the plurality of processing elements may be configured to perform the multiply and accumulate (MAC) operations on data, weights, or parameters stored in the memory 110. The artificial intelligence model may be trained or a specific result may be inferred based on the operation results of the plurality of processing elements.

The controller 130 may be configured to control the memory 110 and the accelerator 120. In some example embodiments, the controller 130 may be a central processing unit (CPU) configured to control overall operations of the system 100.

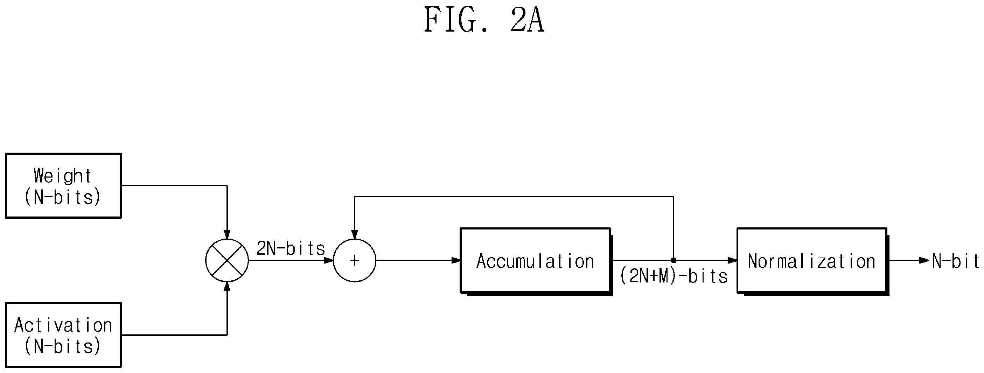

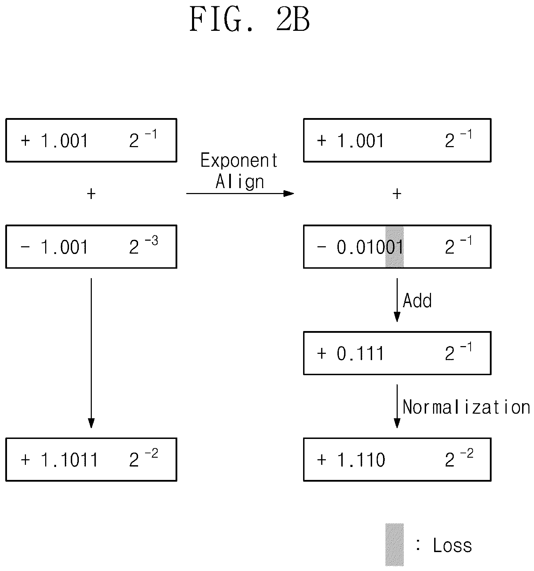

FIGS. 2A and 2B are diagrams for describing a MAC operation performed by an accelerator of FIG. 1. Referring to FIGS. 2A and 2B, the MAC operation may include one multiplication operation and one accumulation operation with respect to two pieces of data.

For example, as illustrated in FIG. 2A, a multiplication may be performed on a weight of N-bits and an activation of N-bits. In this case, the multiplication result has a size of 2N-bits. Thereafter, as the multiplication result is accumulated, the accumulated result may have a size of (2N+M)-bits. When the size of the accumulated result increases, the memory capacity for storing the accumulated result increases, so it is necessary to reduce the size of the accumulated result. Accordingly, the accumulated result may be normalized to an output data of N-bits. The normalized output data may be again stored in the memory 110. The normalized output data may be transmitted to an external device.

In some example embodiments, data in MAC operations may have various data types. For example, the data in the MAC operations may be of an integer type. Alternatively, the data of the MAC operations may be of a floating point type. The floating point type expresses data in the form of a sign, fraction, and exponent. In the floating point type, there are various methods (e.g. various precision types) such as 32-bit single precision and 64-bit double precision.

Depending on the type of data, size of data, etc., the accuracy of operation results, area of hardware structure, and power consumption may change. Accordingly, the type and size of data may be determined in various ways depending on the purpose of the system 100.

In some example embodiments, when the data is a floating point type, performing an addition on the data requires processes of an exponent alignment, an addition, and a normalization with respect to the data. In this case, during processes of the exponent alignment, the addition, and the normalization, losses may occur due to hardware resource limitations.

For example, as illustrated in FIG. 2B, it is assumed that an addition of floating point type data expressed as +1.001×2⁻¹ and -1.001×2⁻³ is performed. The maximum exponent among the exponents of the two pieces of data is -1, so the exponents of the two pieces of data are aligned to -1. To achieve this, the decimal within the fraction of one of the pieces of data may be shifted to compensate for the adjusted exponent. In this case, the two pieces of data are expressed as +1.001×2⁻¹ and -0.01001×2⁻¹. In this case, due to the size limit of a register for storing the two pieces of data, some valid values (e.g., low-order bits, 01) of the fraction (for example, 0.01001) of -0.01001×2⁻¹ may be lost. That is, the actual addition of the fractions of the two pieces of data is performed on +1.001 and -0.010.

The result of this addition may be expressed as +0.111×2⁻¹. Since the most significant bit of the fraction of the addition result is 'O', normalization is performed on the addition result to fit the format of the floating point type. Accordingly, the normalized addition result is expressed as +1.110×2⁻². In contrast, the actual result of adding +1.001×2⁻¹ and -1.001×2⁻³ is +1.1011×2⁻². In detail, losses may occur due to hardware resource limitations during the exponent alignment process, which may cause errors in the final addition result. In some example embodiments, although not illustrated in the example of FIG. 2B, a similar error may occur in the normalization process for the addition result.

That is, as described above, during the addition process for the floating point type data, errors may occur due to the exponent alignment or the normalization. In embodiments of the present disclosure, an accelerator structure that minimizes the above-described error is proposed.

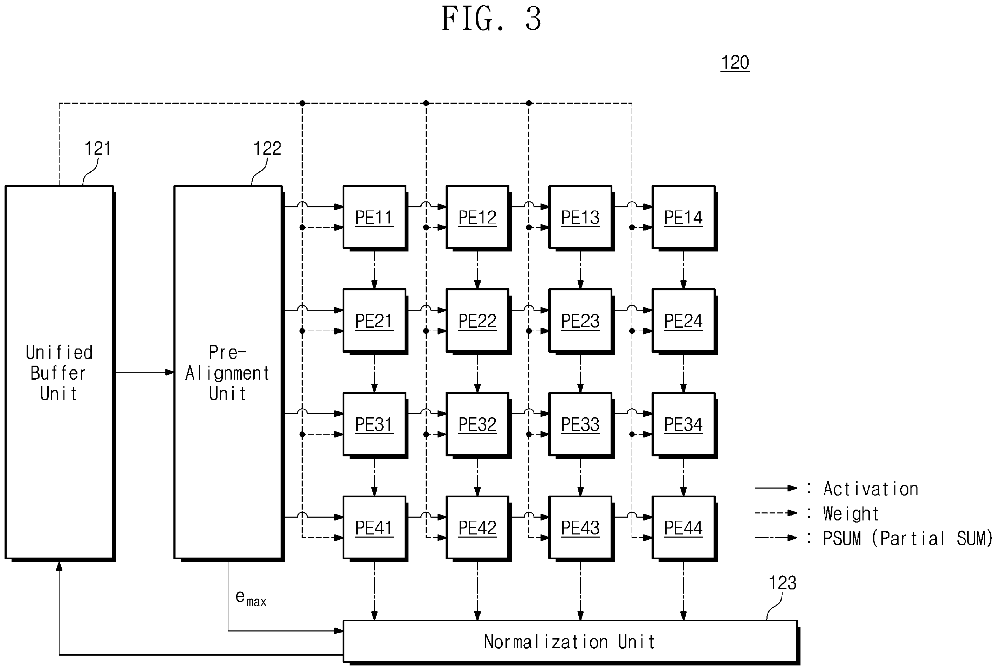

FIG. 3 is a flowchart illustrating an accelerator of FIG. 1. Referring to FIGS. 1 and 3, the accelerator 120 may include a unified buffer unit 121, a pre-alignment unit 122, a normalization unit 123, and a plurality of processing elements PE11 to PE44.

The unified buffer unit 121 may be configured to store various data, weights, or parameters for artificial intelligence operations to be performed in the accelerator 120. In some example embodiments, information stored in the unified buffer unit 121 may be provided from the memory 110 or may be obtained from operation results of the plurality of processing elements PE11 to PE44 of the accelerator 120.

The pre-alignment unit 122 may be configured to perform pre-alignment on data provided from the unified buffer unit 121. For example, data provided from the unified buffer unit 121 may have a floating point type. As a more detailed example, the artificial intelligence model processed in the system 100 may operate an activation as a floating point type and may train weights as an integer type. In this case, floating point accumulation operation for a plurality of data is required. In this case, as described with reference to FIG. 2B, for addition to data of floating point type, exponent alignment of data may be required.

For example, for addition to data of floating point type, pre-alignment is required. Accordingly, the pre-alignment unit 122 may perform exponent alignment on the number of data that may be parallel operated by the accelerator 120. The exponent alignment refers to finding a maximum exponent eₘₐₓ of a plurality of data and performing a bit shift on the fraction of each of the plurality of data based on the found maximum exponent eₘₐₓ. In this case, since all of data that may be operated simultaneously or in parallel should have the same maximum exponent eₘₐₓ, the pre-alignment unit 122 finds the maximum exponent eₘₐₓ for all of data that may be operated simultaneously or in parallel, and performs a bit shift on the fractions of the plurality of data based on the found maximum exponent eₘₐₓ.

The plurality of processing elements PE11 to PE44 may perform operations on data input from the pre-alignment unit 122. In this case, each of the plurality of processing elements PE11 to PE44 may perform a multiplication operation or accumulation operation on the input data to generate a partial sum PSUM. The generated partial sum PSUM may be provided to the normalization unit 123.

For example, each of the plurality of processing elements PE11 to PE44 may receive the activation from the pre-alignment unit 122 and may receive a weight from the unified buffer unit 121. Each of the plurality of processing elements PE11 to PE44 may perform a MAC operation on the received activation and the weight to generate or accumulate the partial sum PSUM. Hereinafter, to easily describe example embodiments of the present disclosure, the plurality of processing elements PE11 to PE44 are described as generating the partial sum PSUM by performing an addition operation or accumulation operation on the data or the activation, however, example embodiments are not limited thereto.

In some example embodiments, the plurality of processing elements PE11 to PE44 perform the addition operation on the aligned fractions (for example, fractions aligned with the same exponent) generated from the pre-alignment unit 122. In this case, since the exponents corresponding to the aligned fractions are the same, the addition operation may be implemented through simple integer operation, integer addition, or integer accumulation. In detail, each of the plurality of processing elements PE11 to PE44 may have a structure of an integer adder.

The normalization unit 123 may receive the partial sum PSUM from each of the plurality of processing elements PE11 to PE44, may operate (e.g. calculate) an accumulated value of the received partial sum PSUM, and may perform normalization on the operated (e.g. calculated) accumulated value to generate an output value. For example, the normalization unit 123 may receive information about the maximum exponent eₘₐₓ from the pre-alignment unit 122. The normalization unit 123 may perform normalization on the accumulated value based on information about the received maximum exponent eₘₐₓ. The generated output value may be stored in the unified buffer unit 121. The output value stored in the unified buffer unit 121 may be used as an input value for other artificial intelligence operations, including generating an output for a user.

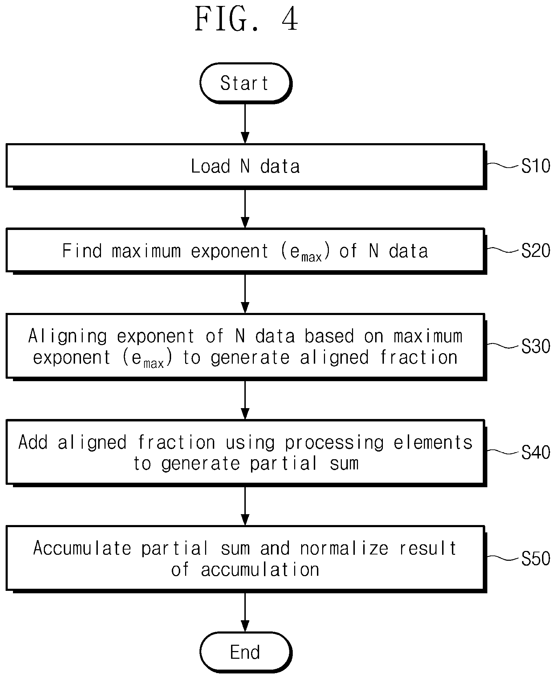

FIG. 4 is a flowchart illustrating an operation of an accelerator of FIG. 3. Hereinafter, for convenience of description, it is assumed that the plurality of processing elements PE11 to PE44 of the accelerator 120 perform an accumulation operation on data.

In operation S10, the accelerator 120 may load 'N' of data (N pieces or units of data). For example, the pre-alignment unit 122 of the accelerator 120 may load the N of data from the unified buffer unit 121. Alternatively, the accelerator 120 may load the N of data from the memory 110. In some example embodiments, each of the N of data may have a floating point type.

In some example embodiments, 'N' may be a natural number corresponding to the number of processing elements PE11 to PE44 of the accelerator 120. For example, the accelerator 120 may perform operations on a plurality of data simultaneously or in parallel to improve operation speed. In this case, the number of data on which operations are performed simultaneously may correspond to an array size of the plurality of processing elements PE11 to PE44 included in the accelerator 120. In detail, the 'N' may indicate the number of data or the size of data that may be operated simultaneously or in parallel in the accelerator 120.

In operation S20, the accelerator 120 may find the maximum exponent eₘₐₓ of the N of data. For example, each of the N of data may have a floating point type. That is, each of the N of data may include a sign, fraction, and exponent. The pre-alignment unit 122 of the accelerator 120 may compare the exponents of each of the N of data and may determine the maximum exponent eₘₐₓ, which is the largest value.

In operation S30, the accelerator 120 may perform the exponent alignment on the N of data based on the maximum exponent eₘₐₓ to generate aligned fractions. Exponent alignment may involve shifting data within the fractions (e.g. shifting the decimal place, or dividing/multiplying the fractions by multiples of 10) to generate aligned fractions so that each value can be represented using the same exponent. For example, as illustrated in FIG. 2B, the data are assumed to be +1.001×2⁻¹ and -1.001×2⁻³. In this case, the maximum exponent eₘₐₓ is -1, so each fraction of the data will be aligned by +1.001 and -0.01001. The aligned fractions may be provided to the plurality of processing elements PE11 to PE44.

In operation S40, the accelerator 120 may generate a partial sum by accumulating the aligned fractions using the plurality of processing elements PE11 to PE44. For example, each of the plurality of processing elements PE11 to PE44 may receive aligned fractions from the pre-alignment unit 122. Each of the plurality of processing elements PE11 to PE44 may be configured to perform an accumulation operation on the aligned fractions. In some example embodiments, since the aligned fractions are aligned based on the maximum exponent through operation S30, each of the plurality of processing elements PE11 to PE44 may perform the accumulation operation on the aligned fractions.

In operation S50, the accelerator 120 may accumulate the partial sums PSUM of each of the plurality of processing elements PE11 to PE44 and may normalize the accumulated results. For example, the normalization unit 123 of the accelerator 120 may receive the partial sum PSUM from each of the plurality of processing elements PE11 to PE44. The exponent corresponding to the plurality of partial sums PSUM will be equal to the maximum exponent eₘₐₓ. The normalization unit 123 may perform normalization on the accumulated results based on the maximum exponent eₘₐₓ. In some example embodiments, the normalized result may be stored in the unified buffer unit 121 or the memory 110, and/or output based on received commands or user input.

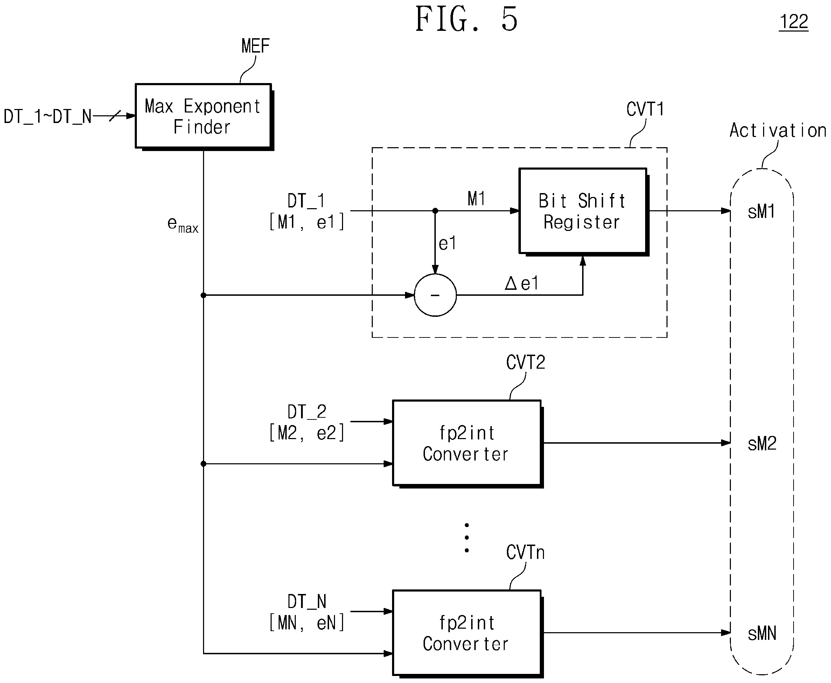

FIG. 5 is a block diagram illustrating a pre-alignment unit of FIG. 3. Referring to FIGS. 1, 3, 4, and 5, the pre-alignment unit 122 may include a maximum exponent finder MEF and a plurality of converters CVT1 to CVTn.

The maximum exponent finder MEF may be configured to find the maximum exponent eₘₐₓ for N of data DT_1 to DT_N. For example, each of the N of data DT_1 to DT_N may be a floating point type. The maximum exponent finder MEF may find the maximum exponent eₘₐₓ by comparing the exponents of each of N of data DT_1 to DT_N. The found maximum exponent eₘₐₓ may be provided to each of the plurality of converters CVT1 to CVTn.

The plurality of converters CVT1 to CVTn may perform the exponent alignment on the plurality of data DT_1 to DT_N based on the maximum exponent eₘₐₓ. For example, the first converter CVT1 may receive the first data DT_1 and the maximum exponent eₘₐₓ. The first data DT_1 may include a first fraction M1 and a first exponent e1. The first converter CVT1 may operate (e.g. calculate) a first exponent difference Δe1, which is a difference between the first exponent e1 of the first data DT_1 and the maximum exponent eₘₐₓ. The first converter CVT1 may generate a first aligned fraction sM1 by performing a bit shift on the first fraction M1 of the first data DT_1 by the first exponent difference △e1. For example, it is assumed that the first exponent e1 is "-5", the maximum exponent eₘₐₓ is "-1", and the first fraction M1 is "1.0100111". In this case, the first converter CVT1 may output the first aligned fraction sM1 (for example, 0.00010100111) by bit-shifting the first fraction M1 by "-4". If the first exponent is the same as the maximum exponent, then the first exponent difference △e1 will be "0", and therefore the first fraction sM1 may not be shifted (e.g. may be shifted by 0). It will be appreciated that bit-shifting by 0 may be considered equivalent to not implementing any bit-shifting for the corresponding data.

The second converter CVT2 may receive the second data DT_2 and the maximum exponent eₘₐₓ. The second converter CVT2 may output a second aligned fraction sM2 by performing the bit shift on a second fraction M2 of the second data DT_2 based on a second exponent difference △e2, which is a difference between a second exponent e2 of the second data DT_2 and the maximum exponent eₘₐₓ. Likewise, the n-th converter CVTn may receive the n-th data DT_N and the maximum exponent eₘₐₓ. The n-th converter CVTn may output an n-th aligned fraction sMN by performing the bit shift on an N-th fraction MN of the n-th data DT_N based on an n-th exponent difference △en, which is a difference between the n-th exponent eN of the n-th data DT_N and the maximum exponent eₘₐₓ.

In some example embodiments, the plurality of aligned fractions sM1 to sMN generated by the plurality of converters CVT1 to CVTn may be provided to the plurality of processing elements PE11 to PE44. The partial sum may be generated by performing the accumulation operation through the plurality of processing elements PE11 to PE44.

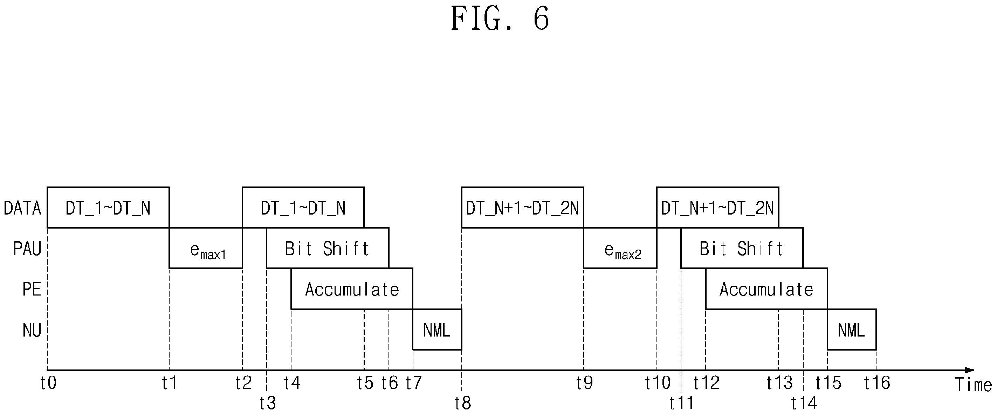

FIG. 6 is a timing diagram for describing an artificial intelligence operation of an accelerator of FIG. 3. Referring to FIGS. 1, 3, and 6, the accelerator 120 may perform an artificial intelligence operation on first to second N data DT_1 to DT_2N. The accelerator 120 may perform the artificial intelligence operation on the N of data simultaneously or in parallel. In this case, the accelerator 120 will perform the artificial intelligence operation on the first to N-th data DT_1 to DT_N, and then will perform the artificial intelligence operation on the remaining data DT_N+1 to DT_2N.

For example, during a period t0 to t1 from a Oth time to a first time, the pre-alignment unit 122 of the accelerator 120 may load the first to N-th data DT_1 to DT_N from the unified buffer unit 121. After all the first to N-th data DT_1 to DT_N are loaded, during a period t1 to t2 from the first time a second time, the pre-alignment unit 122 of the accelerator 120 may find a maximum exponent eₘₐₓ₁ among exponents of the first to N-th data DT_1 to DT_N. Thereafter, during a period t2 to t5 from the second time to a fifth time, the pre-alignment unit 122 of the accelerator 120 may reload the first to N-th data DT_1 to DT_N. During a period t3 to t6 from a third time to a sixth time, the pre-alignment unit 122 of the accelerator 120 may generate aligned fractions by performing the bit shift on fractions of each of the first to N-th data DT_1 to DT_N based on the maximum exponent eₘₐₓ₁. During a period t4 to t7 from a fourth time to a seventh time, the plurality of processing elements PE11 to PE44 of the accelerator 120 may receive the aligned fractions from the pre-alignment unit 122, and may perform the accumulation operation on the aligned fractions. After the accumulation operation by the plurality of processing elements PE11 to PE44 is completed, during a period t7 to t8 from the seventh time to an eighth time, the normalization unit 123 may receive the partial sum from the plurality of processing elements PE11 to PE44, may accumulate the received partial sums, and may perform the normalization on the accumulated partial sums.

During a period t8 to t9 from the eighth to ninth time, the pre-alignment unit 122 of the accelerator 120 may load (N+1)-th to 2N-th data DT_N+1 to DT_2N from the unified buffer unit 121. After the (N+1)-th to 2N-th data DT_N+1 to DT_2N are all loaded, during a period t9 to t10 from the ninth time to a tenth time, the pre-alignment unit 122 of the accelerator 120 may find a maximum exponent eₘₐₓ₂ among exponents of the (N+1)-th to 2N-th data DT_N+1 to DT_2N. Thereafter, during a period t10 to t11 from the tenth time to an eleventh time, the pre-alignment unit 122 of the accelerator 120 may reload the (N+1)-th to 2N-th data DT_N+1 to DT_2N. During a period t11 to t14 from the eleventh time to a fourteenth time, the pre-alignment unit 122 of the accelerator 120 may generate aligned fractions by performing the bit shift on fractions of each of the (N+1)-th to 2N-th data DT_N+ 1 to DT_2N based on the maximum exponent eₘₐₓ₂. During a period t12 to t15 from a twelfth time to a fifteenth time, the plurality of processing elements PE11 to PE44 of the accelerator 120 may receive the aligned fractions from the pre-alignment unit 122, and may perform the accumulation operation on the aligned fractions. After the accumulation operation by the plurality of processing elements PE11 to PE44 is completed, during a period t15 to t16 from the fifteenth time to a sixteenth time, the normalization unit 123 may receive the partial sum from the plurality of processing elements PE11 to PE44, may accumulate the received partial sums, and may perform the normalization on the accumulated partial sums.

As described above, the accelerator 120 may perform artificial intelligence operations on the N of data simultaneously or in parallel. Therefore, based on the maximum exponent of the N of data, the exponent alignment is performed on the N of data in batches. In this case, due to the exponent alignment, the bit size corresponding to the fractions of the N of data may increase, which may cause omission of valid values of the fraction due to hardware or resource limitations. Accordingly, since artificial intelligence operations are performed with operation errors reflected, overall operation reliability may decrease.

In addition, when the number of data requiring artificial intelligence operation is 'N' or more, the accelerator 120 performs the artificial intelligence operation in units of N of data. In this case, the number of normalization times of output data increases, which may decrease operation reliability.

In addition, since the accelerator 120 should find the maximum exponent eₘₐₓ for all N of data, the pre-alignment unit 122 of the accelerator 120 should load all N of data to find the maximum exponent eₘₐₓ. Accordingly, performance degradation may occur due to data loading. As described above, when artificial intelligence operations are performed in predetermined units according to the hardware structure of the accelerator 120, overall operation reliability and performance may be degraded.

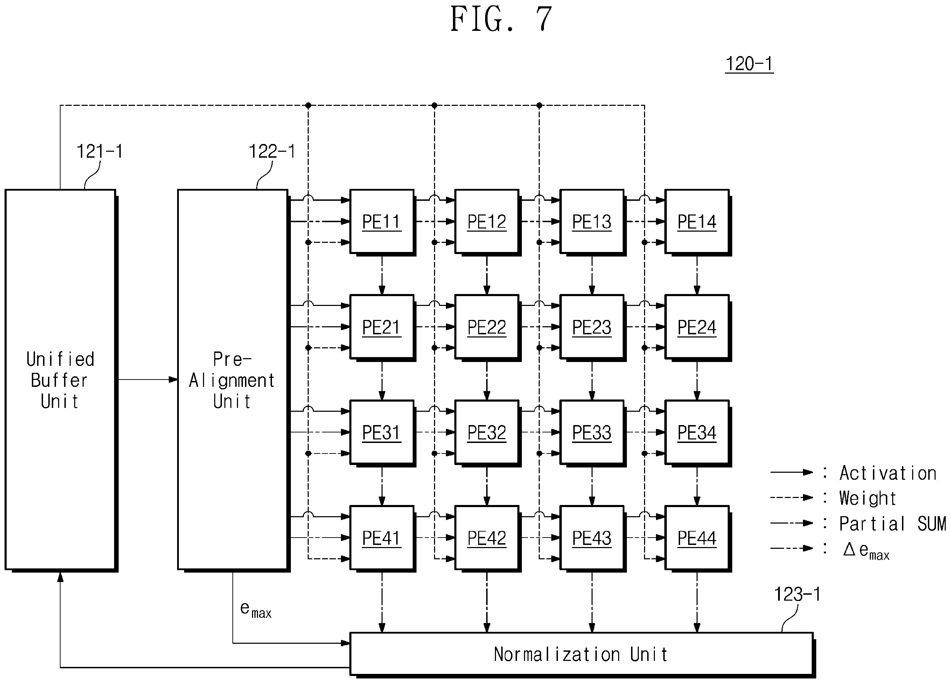

FIG. 7 is a block diagram illustrating an accelerator of FIG. 1. For convenience of description, additional description of the same components is omitted to avoid redundancy. Referring to FIGS. 1 and 7, an accelerator 120-1 may include a unified buffer unit 121-1, a pre-alignment unit 122-1, a normalization unit 123-1, and the plurality of processing elements PE11~ PE44.

The unified buffer unit 121-1 may be configured to store various data, weights, or parameters for artificial intelligence operations to be performed in the accelerator 120-1. In some example embodiments, information stored in the unified buffer unit 121-1 may be provided from the memory 110 or may be obtained from results operated by the plurality of processing elements PE11 to PE44 of the accelerator 120-1.

The pre-alignment unit 122-1 may be configured to perform exponent alignment on data provided from the unified buffer unit 121-1.

For example, in the embodiment described with reference to FIGS. 3 to 6, the pre-alignment unit 122 finds the maximum exponent eₘₐₓ with respect to N of data that may be operated simultaneously or in parallel, and performs the bit shift on the N of data based on the found maximum exponent eₘₐₓ.

In contrast, the pre-alignment unit 122-1 of FIG. 7 may find the maximum exponent for 'K' of data (K units of data), may compare the found maximum exponent e_{max_new} with a previous maximum exponent e_{max_old}, and may perform the bit shift on K of data based on the comparison result. In this case, the 'K' is a natural number less than 'N'. In some example embodiments K may be one half of N, one third of N, two thirds of N, or another fraction of N, the inventive concepts not being limited thereto. In detail, since the pre-alignment unit 122-1 may find the maximum exponent and may perform the bit shift regardless of the number of data, time required to find the maximum exponent may be shortened. Thereby, power consumption of the device may be reduced.

The plurality of processing elements PE11 to PE44 may perform operations on data input from the pre-alignment unit 122-1. In this case, each of the plurality of processing elements PE11 to PE44 may perform a multiplication operation or accumulation operation on the input data to generate the partial sum PSUM. The generated partial sum PSUM may be provided to the normalization unit 123-1.

For example, according to some example embodiments, there may be an increase in speed, accuracy, and/or power efficiency of communication and operation of the device based on the above methods. Therefore, the improved devices and methods overcome the deficiencies of the conventional devices and methods of use of floating point type data by neural nets, artificial intelligence, etc., while reducing resource consumption, increasing data accuracy, and increasing data clarity. For example, using the examples embodiments disclosed herein, errors in calculations may be reduced, creating more reliable cumulation operations and thereby improving speed, accuracy, and/or power efficiency (such as by reduced repetition of operations).

In some example embodiments, each of the plurality of processing elements PE11 to PE44 may receive a maximum exponent difference △eₘₐₓ from the pre-alignment unit 122-1. The maximum exponent difference △eₘₐₓ refers to a difference between the maximum exponent (for example, e_{max_new}) of currently accumulated data and the maximum exponent (for example, e_{max_old}) of previously accumulated data. Each of the plurality of processing elements PE11 to PE44 may include an accumulation register configured to store the result of an accumulation operation. The accumulated value stored in the accumulation register may store a value corresponding to the previous maximum exponent e_{max_old}. Therefore, to add the currently input data (for example, fraction aligned based on the current maximum exponent e_{max_new}) and the accumulated value stored in the accumulation register, the accumulated value stored in the accumulation register should be aligned to the current maximum exponent e_{max_new}. Accordingly, each of the plurality of processing elements PE11 to PE44 may perform the bit shift on the accumulated value stored in the accumulation register based on the maximum exponent difference Δeₘₐₓ. The structure and operation of the plurality of processing elements PE11 to PE44 are described in more detail with reference to the drawings below.

The normalization unit 123-1 may receive the partial sum PSUM from each of the plurality of processing elements PE11 to PE44, may operate (e.g. calculate) an accumulated value of the received partial sums PSUM, and may perform normalization on the operated (e.g. calculated) accumulated value to generate an output value.

For example, the normalization unit 123-1 may be configured to convert the partial sum PSUM received from each of the plurality of processing elements PE11 to PE44 based on the maximum exponent eₘₐₓ. The normalization unit 123-1 may generate a final output value by accumulating or combining the converted partial sums. The output value may be stored in the unified buffer unit 121-1 and may be used as an input value for other artificial intelligence operations as discussed above.

In some example embodiments, the normalization unit 123-1 may include a converter configured to convert the partial sum to a floating point type and an accumulator configured to accumulate partial sums converted to the floating point type. However, the scope of the present disclosure is not limited thereto.

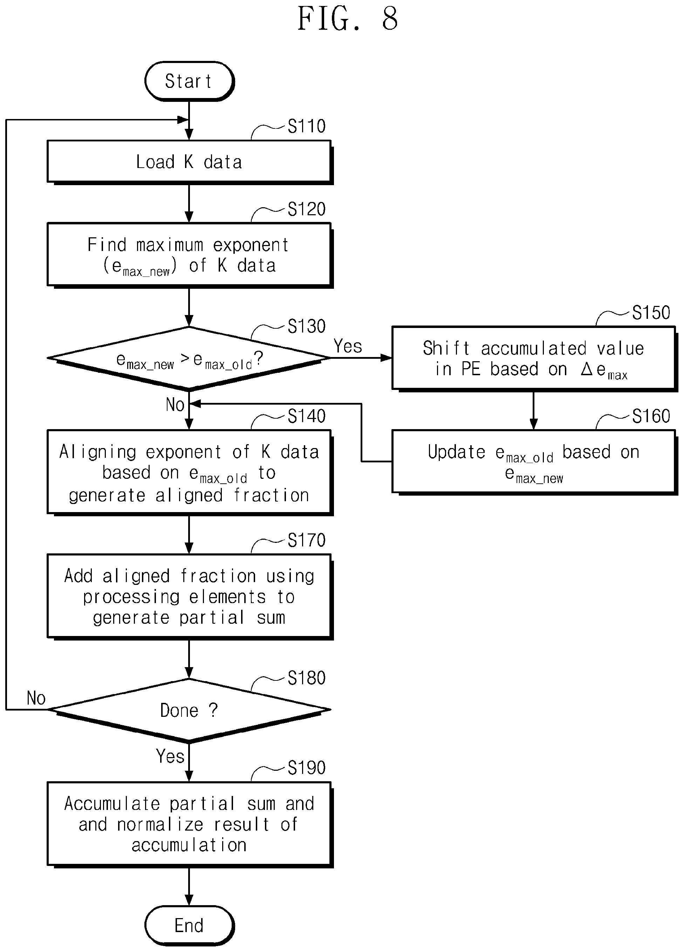

FIG. 8 is a flowchart illustrating an operation of an accelerator of FIG. 7. Referring to FIGS. 7 and 8, in operation S110, the accelerator 120-1 may load K of data. For example, as described above, the accelerator 120 may perform artificial intelligence operations on N of data simultaneously or in parallel. In contrast, the accelerator 120-1 may load K of data less than the N of data from the unified buffer unit 121-1 or the memory 110.

In operation S120, the accelerator 120-1 may find the maximum exponent e_{max_new} for K of data. For convenience of description, the maximum exponent for K of data is called a new maximum exponent e_{max_new}.

In operation S130, the accelerator 120-1 may determine whether the new maximum exponent e_{max_new} is greater than the previous maximum exponent e_{max_old}. For example, the pre-alignment unit 122-1 of the accelerator 120-1 may include or store information on a maximum exponent (hereinafter referred to as a previous maximum exponent e_{max_old}) of data used or converted for previous artificial intelligence operations. In detail, the exponent of the data used in the previous artificial intelligence operations is aligned based on the previous maximum exponent e_{max_old}. In this case, the value accumulated in each of the plurality of processing elements PE11 to PE44 will also correspond to the previous maximum exponent e_{max_old}.

Therefore, when the new maximum exponent e_{max_new} is not greater than the previous maximum exponent e_{max_old}, even if exponent alignment is performed for K of data based on the previous maximum exponent e_{max_old}, the accumulation operation may be performed normally in the plurality of processing elements PE11 to PE44. In detail, when the new maximum exponent e_{max_new} is not greater than the previous maximum exponent e_{max_old}, in operation S140, the pre-alignment unit 122-1 of the accelerator 120-1 may generate aligned fractions by performing the exponent alignment on the K of data based on the previous maximum exponent e_{max_old}.

In contrast, when the new maximum exponent e_{max_new} is greater than the previous maximum exponent e_{max_old}, a bit shift for the accumulated value in each of the plurality of processing elements PE1 to PE44 is required. Accordingly, when the new maximum exponent e_{max_new} is greater than the previous maximum exponent e_{max_old}, in operation S150, the accelerator 120-1 may generate the aligned accumulated value by performing the bit shift on the accumulated value in the plurality of processing elements PE1 to PE44 based on the maximum exponent difference △eₘₐₓ. In this case, the maximum exponent difference Δeₘₐₓ may indicate a difference between the new maximum exponent e_{max_new} and the previous maximum exponent e_{max_old}.

Thereafter, in operation S160, the accelerator 120-1 may update the previous maximum exponent e_{max_old} based on the new maximum exponent e_{max_new}. Afterwards, the accelerator 120-1 performs operation of operation S140. In this case, for the fractions of K of data, the bit shift operation will be performed based on the updated previous maximum exponent (for example, new maximum exponent e_{max_new}).

In operation S170, the accelerator 120-1 may generate a partial sum by performing an accumulation operation on the aligned fractions using the plurality of processing elements PE11 to PE44. In some example embodiments, the accumulation operation on the aligned fractions may be performed through an addition operation on the aligned fractions and the previous accumulation value. In some example embodiments, the aligned fractions and the previous accumulated value (or aligned accumulated value) correspond to the same maximum exponent, so the addition operation for them may be implemented through addition of an integer type.

In operation S180, the accelerator 120-1 may determine whether the artificial intelligence operation for all data is completed. When the artificial intelligence operation on all data is not completed (for example, when there is remaining data for which the artificial intelligence operation is to be performed), the accelerator 120-1 may perform operations S 110 to S170 again.

When the artificial intelligence operation for all data is completed, in operation S190, the accelerator 120-1 may accumulate the partial sum PSUM of each of the plurality of processing elements PE11 to PE44 and may normalize a result of the accumulation.

As described above, the accelerator 120-1 according to some example embodiments of the present disclosure may perform the accumulation operation on a plurality of data of a floating point type. In this case, the accelerator 120-1 may perform the bit shift on the plurality of data and accumulated values based on the new maximum exponent e_{max_new} and the previous maximum exponent e_{max_old} for the plurality of data. In this case, since the loss of valid values due to bit shifting may be reduced, the error in the operation result may be reduced. Additionally, since maximum exponent finding and bit shift may be performed on sequentially input data without the need to load all data that may be operated simultaneously or in parallel, operation speed may be improved. In addition, since normalization is performed only once during the cumulation operation, errors due to normalization may be reduced. Accordingly, an accelerator with improved reliability and performance is provided.

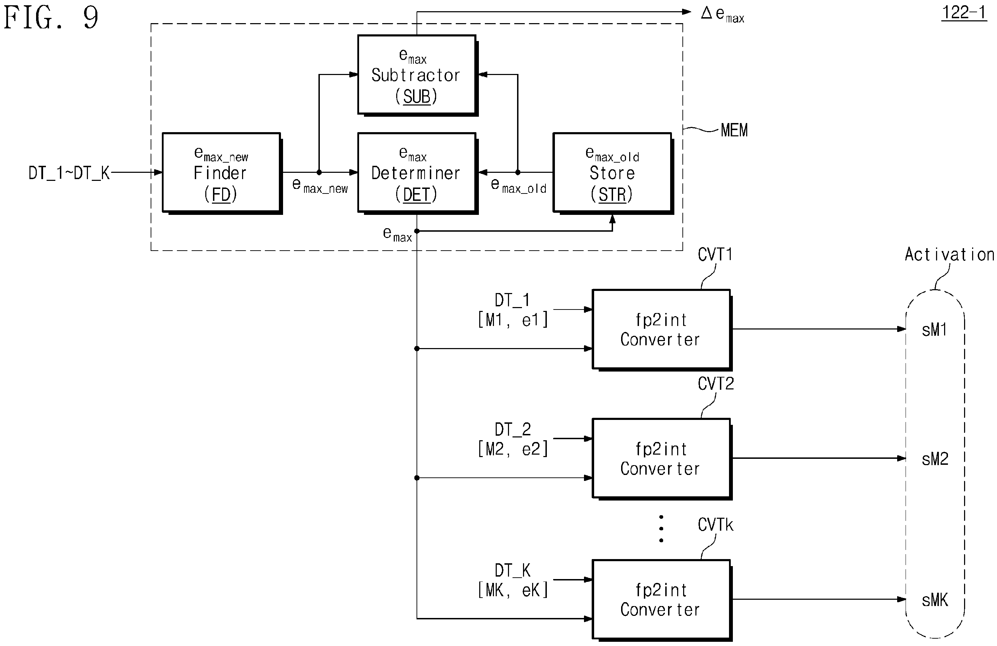

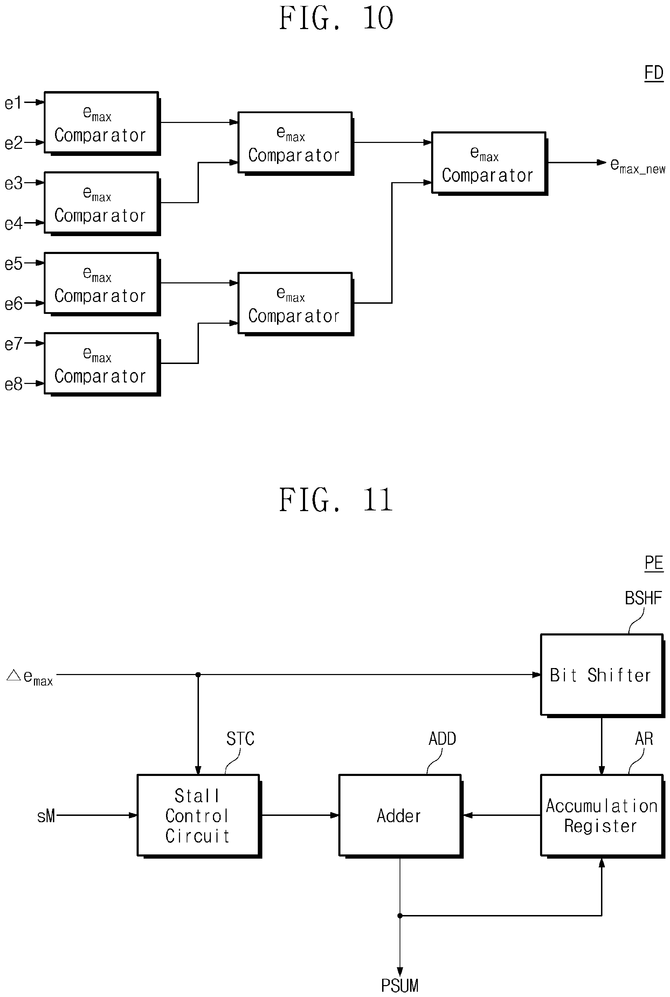

FIG. 9 is a block diagram illustrating a pre-alignment unit of FIG. 7. FIG. 10 is a diagram for describing a structure of a maximum exponent finder of FIG. 9. For convenience of description, additional description associated with the components described above will be omitted to avoid redundancy. Referring to FIGS. 7 and 9, the pre-alignment unit 122-1 may include a maximum exponent manager MEM and a plurality of converters CVT1 to CVTk.

The maximum exponent manager MEM may find the new maximum exponent e_{max_new} for the K of data K DT to be currently calculated, may compare the new maximum exponent e_{max_new} and the previous maximum exponent e_{max_old}, and may output the maximum exponent eₘₐₓ and the maximum exponent difference △eₘₐₓ based on the comparison result. For example, the maximum exponent manager MEM may include a maximum exponent finder FD, a maximum exponent determiner DET, a previous maximum exponent store STR, and a maximum exponent subtractor SUB.

The maximum exponent finder FD may compare the exponents of K of data and may find the new maximum exponent e_{max_new} based on the comparison result. For example, as illustrated in FIG. 10, the maximum exponent finder FD may include a plurality of comparators. The plurality of comparators may be connected in a tree structure and may be configured to compare a plurality of exponents with each other to output the new maximum exponent e_{max_new}.

The maximum exponent subtractor SUB may receive the new maximum exponent e_{max_new} from the maximum exponent finder FD, may receive the previous maximum exponent e_{max_old} from the previous maximum exponent store STR, and may output the maximum exponent difference Δeₘₐₓ based on the new maximum exponent e_{max_new} and the previous maximum exponent e_{max_old}. For example, when the new maximum exponent e_{max_new} is greater than the previous maximum exponent e_{max_old}, the maximum exponent subtractor SUB may output the maximum exponent difference Δeₘₐₓ, which is a difference between the new maximum exponent e_{max_new} and the previous maximum exponent e_{max_old}. When the new maximum exponent e_{max_new} is not greater than the previous maximum exponent e_{max_old}, the maximum exponent subtractor SUB may output the maximum exponent difference △eₘₐₓ as '0'.

The maximum exponent determiner DET may receive the new maximum exponent e_{max_new} from the maximum exponent finder FD and may receive the previous maximum exponent e_{max_old} from the previous maximum exponent store STR. The maximum exponent determiner DET may determine whether the new maximum exponent e_{max_new} is greater than the previous maximum exponent e_{max_old}. When the new maximum exponent e_{max_new} is greater than the previous maximum exponent e_{max_old}, the maximum exponent determiner DET may output the new maximum exponent e_{max_new} as the maximum exponent eₘₐₓ. When the new maximum exponent e_{max_new} is not greater than the previous maximum exponent e_{max_old}, the maximum exponent determiner DET may output the previous maximum exponent e_{max_old} as the maximum exponent eₘₐₓ. The maximum exponent eₘₐₓ is provided to each of the plurality of converters CVT1 to CVTk. The maximum exponent eₘₐₓ is also provided to the previous maximum exponent store STR for storage as the new previous maximum exponent e_{max_old} for use in subsequent calculations.

The plurality of converters CVT1 to CVTk may generate aligned fractions sM1 to sMK by performing the bit shift on each of the plurality of data DT_1 to DT_K based on the maximum exponent eₘₐₓ. Since the operation of the plurality of converters CVT1 to CVTk is similar to that described above, additional description thereof is omitted to avoid redundancy.

FIG. 11 is a block diagram illustrating one of a plurality of processing elements of FIG. 7. To easily describe example embodiments of the present disclosure, only a partial configuration of the processing element PE is illustrated in FIG. 11. However, the scope of the present disclosure is not limited thereto, and the processing element PE may further include various other components.

Referring to FIGS. 7 and 11, the processing element PE may include an adder ADD, an accumulation register AR, a bit shifter BSHF, and a stall control circuit STC. The adder ADD may receive the aligned fraction sM from the pre-alignment unit 122-1 and may receive the accumulated value from the accumulation register AR. The adder ADD may generate the partial sum PSUM by performing an accumulation operation on the aligned fraction sM and the accumulated value. The partial sum PSUM is stored in the accumulation register AR and may be used as the accumulation value of the next accumulation operation. Alternatively or in addition, the partial sum PSUM may be provided to another processing unit. Alternatively or in addition, the partial sum PSUM may be provided to the normalization unit 123-1.

The bit shifter BSHF may receive the maximum exponent difference Δeₘₐₓ from the pre-alignment unit 122-1. The bit shifter BSHF may perform the bit shift on the accumulated value stored in the accumulation register AR based on the maximum exponent difference △eₘₐₓ. For example, the accumulated value stored in the accumulation register AR may correspond to the previous maximum exponent e_{max_old}. When the maximum exponent eₘₐₓ is changed (for example, the new maximum exponent e_{max_new} is greater than the previous maximum exponent e_{max_old}), the aligned fraction sM will correspond to the new maximum exponent e_{max_new}. In this case, for normal operation of the adder ADD, the accumulated value stored in the accumulation register AR should be aligned to match the new maximum exponent e_{max_new}. Therefore, the bit shifter BSHF may perform the bit shift on the accumulated value of the accumulation register AR by the maximum exponent difference △eₘₐₓ, which is a difference between the new maximum exponent e_{max_new} and the previous maximum exponent e_{max_old}. In this case, the aligned accumulated value (for example, the bit-shifted accumulated value) in the accumulation register AR corresponds to the new maximum exponent e_{max_new}, and the adder ADD may normally perform the accumulation operation on the aligned fraction sM and the accumulated value. In some example embodiments, the adder ADD may be an integer type adder or an integer adder.

In some example embodiments, the bit shifter BSHF may perform a bit shift on the accumulation register AR in units of 1 bit in synchronization with a clock signal. For example, when the maximum exponent difference Δeₘₐₓ is '3', the bit shift operation on the accumulation register AR may be performed for 3 periods of an operation clock. Therefore, to prevent or reduce the aligned fraction sM from being input to the adder ADD until the bit shift operation for the accumulation register AR is completed, the stall control circuit STC stall the aligned fraction sM during the bit shift operation so that the aligned fraction sM is be input to the adder ADD after the bit shift operation has been completed.

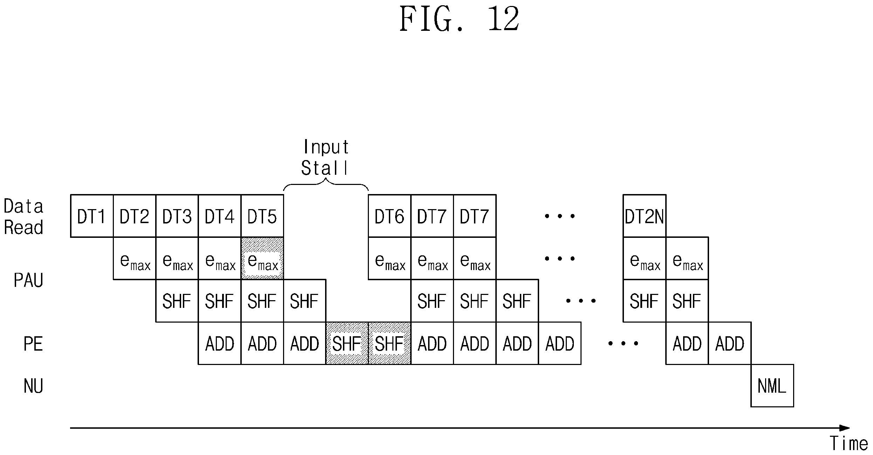

FIG. 12 is a timing diagram illustrating an operation of an accelerator of FIG. 7. Referring to FIGS. 7 and 12, the accelerator 120-1 may perform artificial intelligence operations on the first to 2N^{th} data DT_1 to DT_2N.

The pre-alignment unit 122-1 of the accelerator 120-1 may find the maximum exponent eₘₐₓ while sequentially loading the first to 2N^{th} data DT_1 to DT_2N, and may perform the bit shift on the first to 2N^{th} data DT_1 to DT_2N based on the found maximum exponent eₘₐₓ. For example, the pre-alignment unit 122-1 may load the first and second data DT_1 and DT_2, may find the maximum exponent eₘₐₓ of the first and second data DT_1 and DT_2, and may perform the bit shift on the first and second data DT_1 and DT_2 based on the found maximum exponent eₘₐₓ. Thereafter, the pre-alignment unit 122-1 may load third data DT_3, may find the maximum exponent eₘₐₓ, and may perform the bit shift on the third data DT_3. The results of the bit shift operation (for example, aligned fractions) are provided to the processing elements PE. The processing elements PE may receive aligned fractions from the pre-alignment unit 122-1 and may perform an addition operation on the aligned fractions.

In this case, during the maximum exponent eₘₐₓ finding process of the pre-alignment unit 122-1, the new maximum exponent e_{max_new} may be greater than the previous maximum exponent e_{max_old}. In this case, the processing elements PE may perform the bit shift on the accumulated values of the accumulation register AR based on the maximum exponent difference △eₘₐₓ. While the bit shift operation is performed in the processing element PE, data input may be stopped or stalled by the stall control circuit STC.

As the above-described operations are sequentially performed, the accelerator 120-1 may complete the accumulation operation for the first to 2N^{th} data DT_1 to DT_2N. When all accumulation operations for the first to 2N^{th} data DT_1 to DT_2N are completed, the normalization unit 123-1 of the accelerator 120-1 may perform normalization NML on the partial sums of the processing element PE.

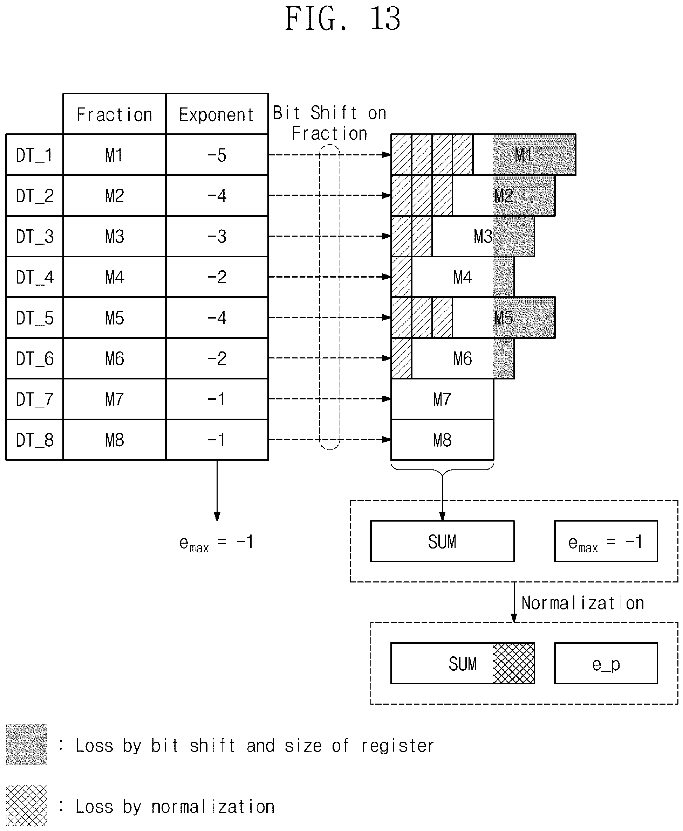

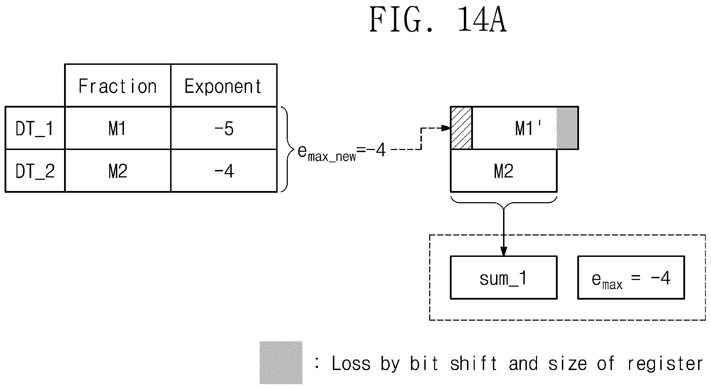

FIG. 13 is a diagram for describing an operation by an accelerator of FIG. 3. FIGS. 14A to 14C are diagrams for describing an operation by an accelerator of FIG. 7. For convenience of description, it is assumed that the accelerator 120 or 120-1 performs an accumulation operation on first to eighth data. In this case, it is assumed that the first to eighth data DT1 to DT8 may include first to eighth fractions M1 to M8, respectively, the exponent of the first data DT1 is -5, the exponent of the second data DT2 is -4, the exponent of the third data DT3 is -3, the exponent of the fourth data DT4 is -2, the exponent of the fifth data DT5 is -4, the exponent of the sixth data DT6 is -2, the exponent of the seventh data DT7 is -1, and the exponent of the eighth data DT8 is -1.

In some example embodiments, it is assumed that a bit shift register configured to store the fraction of data to be operated (e.g. to be used for later operations/calculations) corresponds to the size of the fraction. In detail, when a bit shift is performed on the fraction, a loss of the valid value corresponding to the bit-shifted size may occur.

First, referring to FIGS. 3 and 13, the accelerator 120 may perform an accumulation operation on the first to eighth data DT_1 to DT_8. For example, the pre-alignment unit 122 of the accelerator 120 may find the maximum exponent eₘₐₓ among exponents of the first to eighth data DT_1 to DT_8. In this case, the maximum exponent eₘₐₓ will be -1.

The pre-alignment unit 122 of the accelerator 120 may perform the bit shift on the fractions M1 to M8 of the first to eighth data DT_1 to DT_8 based on the found maximum exponent eₘₐₓ (for example, -1). As an example, the exponent of the first data DT_1 is -5, so the first fraction M1 may be bit-shifted by 4. Likewise, the exponents of the second to sixth data DT_2 to DT_6 are -4, -3, -2, -4, and -2, respectively, so the second to sixth fractions M2 to M6 may be bit-shifted by 3, 2, 1, 3, and 1, respectively.

Due to the bit shift for the first to sixth fractions M1 to M6 described above, a loss (as indicated by shading in FIG. 13) of valid value(s) for each fraction may occur. This loss of valid values causes reduced reliability of the results of the accumulation operation.

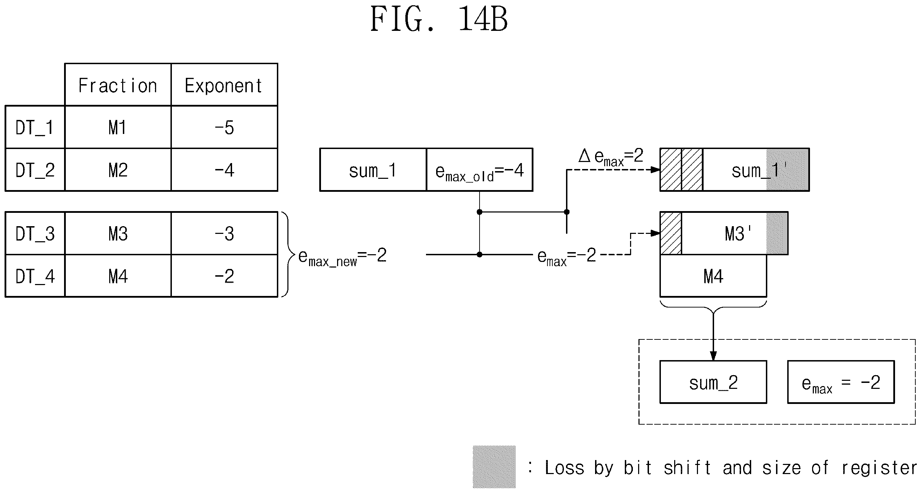

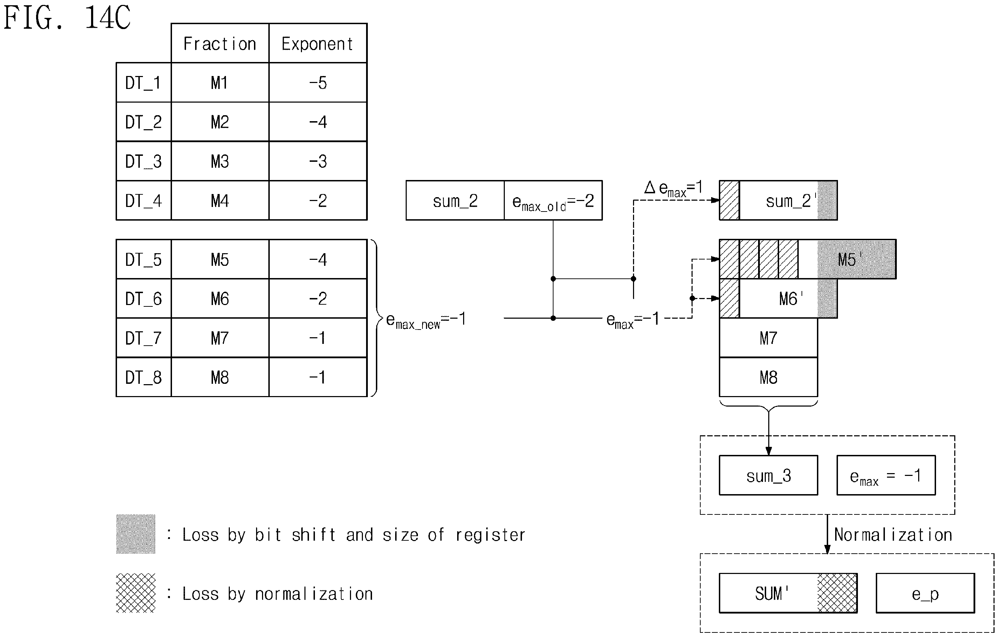

Next, referring to FIGS. 7, 14A, 14B, and 14C, the accelerator 120-1 may perform an accumulation operation on the first to eighth data DT_1 to DT_8. For example, as illustrated in FIG. 14A, the pre-alignment unit 122-1 of the accelerator 120-1 may perform the bit shift on the first and second data DT_1 and DT_2. Since the maximum exponent e_{max_new} of the first and second data DT_1 and DT_2 is -4, the first fraction M1 of the first data DT_1 is bit-shifted by 1. The accelerator 120-1 performs an accumulation operation on the bit-shifted first fraction M1' and the second fraction M2 to generate a first accumulation value sum_1. The first accumulation value sum_1 may be stored in at least one accumulation register AR among the plurality of processing elements PE11 to PE44.

Afterwards, as illustrated in FIG. 14B, the accelerator 120-1 may further perform an accumulation operation on the third and fourth data DT_3 and DT_4. For example, the accelerator 120-1 may store information about the first accumulation value sum_1 and the previous maximum exponent (e_{max_old}=-4) as a result of the accumulation operation of the first and second data DT_1 and DT_2. The accelerator 120-1 may perform the bit shift on the third and fourth data DT_3 and DT_4 based on the previous maximum exponent (e_{max_old}=-4). In detail, the maximum exponent e_{max_new} of the third and fourth data DT_3, DT_4 is -2, and the previous maximum exponent e_{max_old} is -4, so the third fraction M3 of the third data DT_3 is bit-shifted by 1. Since the maximum exponent difference Δeₘₐₓ is 2, the first accumulated value sum_1 is bit-shifted by 2. The accelerator 120-1 performs an accumulation operation on the bit-shifted first accumulated value sum_1', the bit-shifted third fraction M3', and the fourth fraction M4 to generate a second accumulated value sum_2. The second accumulation value sum_2 may be stored in at least one accumulation register AR among the plurality of processing elements PE11 to PE44.

Afterwards, as illustrated in FIG. 14C, the accelerator 120-1 may perform an accumulation operation on the fifth to eighth data DT_5 to DT_8. For example, the accelerator 120-1 may store information about the second accumulation value sum_2 and the previous maximum exponent (e_{max_old}=-2) as a result of the accumulation operation of the first and fourth data DT_1 and DT_4.

The accelerator 120-1 may perform the bit shift on the fifth to eighth data DT_5 to DT_8 based on the previous maximum exponent (e_{max_old}=-2). In detail, the maximum exponent e_{max_new} of the fifth to eighth data DT_5 to DT_8 is -1, and the previous maximum exponent e_{max_old} is -2, so the fifth fraction M5 of the fifth data DT_5 is bit-shifted by 4, and the sixth fraction M6 of the sixth data DT_6 is bit-shifted by 1. Since the maximum exponent difference Δeₘₐₓ is 1, the second accumulated value sum_2 is bit-shifted by 1. The accelerator 120-1 may perform an accumulation operation on the bit-shifted second accumulated value sum_2', the bit-shifted fifth fraction M5', the bit-shifted sixth fraction M6', the seventh fraction M7, and the eighth fraction M8 to generate a third accumulation value sum_3. The third accumulation value sum_3 may be stored in at least one accumulation register AR among the plurality of processing elements PE11 to PE44.

In some example embodiments, since all accumulation operations for the first to eighth data DT_1 to DT_8 are completed, the accelerator 120-1 may perform normalization on the result of the accumulation operation, that is, the third accumulation value sum_3 and the maximum exponent (eₘₐₓ=-1) to generate a final result (for example, SUM' and e_p).

In some example embodiments, since a bit shift by 1 is performed on the first fraction M1 in FIG. 14A, a loss of 1 bit of valid value occurs for the first fraction M1. In FIG. 14B, a bit shift by 1 is performed on the third fraction M3, and a loss of 1 bit of valid value occurs for the third fraction M3. The loss for the first fraction M1 and the third fraction M3 is a relatively small loss compared to the embodiment of FIG. 13. As a bit shift is performed on the accumulated value, although a loss may occur, but the loss on the accumulated value has a relatively smaller error compared to the direct loss on the operand, so embodiments of FIGS. 14A to 14C reduces the error of the cumulative operation result compared to some example embodiments of FIG. 13.

As described above, according to embodiments of the present disclosure, an accelerator may be configured to generate, train, or infer an artificial intelligence model by performing various operations. In this case, the accelerator may perform an accumulation operation on a plurality of data of floating point type. The accelerator may find a new maximum exponent for a plurality of data, and may perform a bit shift on the plurality of data and the accumulated value accumulated heretofore based on the new maximum exponent and the previous maximum exponent. In this case, a loss due to the bit shift operation of the operand may be reduced, and since only one normalization is performed when performing an accumulation operation on multiple data, the reliability of the operation result may be improved.

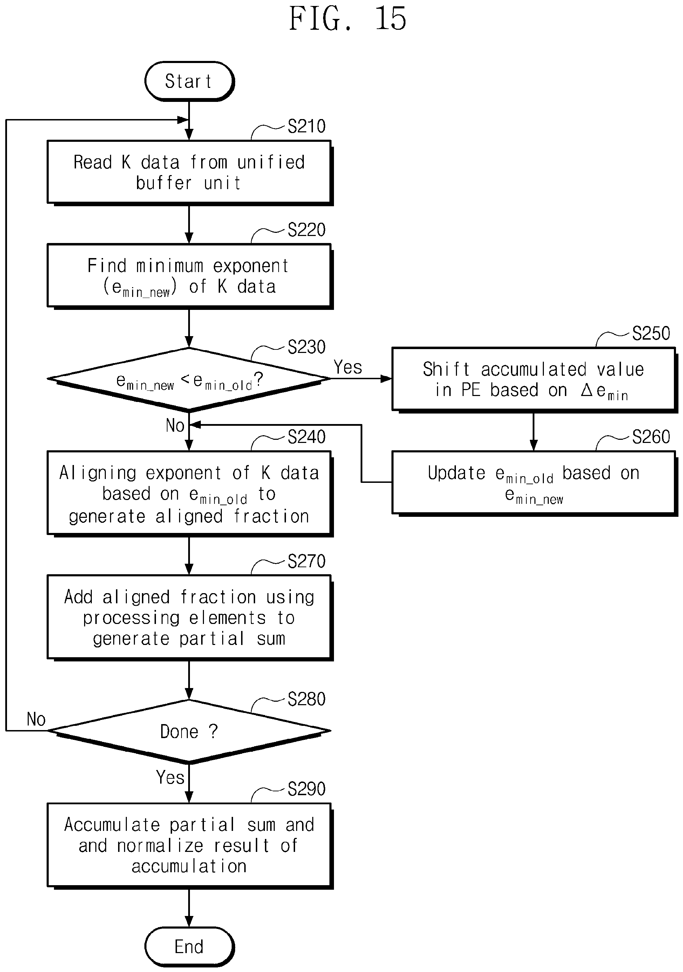

FIG. 15 is a flowchart illustrating an operation of an accelerator of FIG. 7. For convenience of description, the detailed description of redundant components is omitted to avoid redundancy.

Referring to FIGS. 7 and 15, the accelerator 120-1 may perform operation S210. Operation 5210 is similar to operation S110 of FIG. 8, and thus, a detailed description thereof will not be repeated here.

In operation S220, the accelerator 120-1 may find the minimum exponent eₘᵢₙ of K of data. For example, in the embodiment described with reference to FIGS. 7 to 14C, the pre-alignment unit 122-1 of the accelerator 120-1 finds the maximum exponent eₘₐₓ of K of data. However, the scope of the present disclosure is not limited thereto, and the pre-alignment unit 122-1 of the accelerator 120-1 may find a minimum exponent eₘᵢₙ of K of data.

In operation S230, the accelerator 120-1 may determine whether the new minimum exponent e_{min_new} is less than the previous minimum exponent e_{min_old}. When the new minimum exponent e_{min_new} is not less than the previous minimum exponent e_{min_old}, in operation S240, the accelerator 120-1 may perform the exponent alignment on the K of data based on the previous minimum exponent e_{min_old} to generate aligned fractions.

When the new minimum exponent e_{min_new} is less than the previous minimum exponent e_{min_old}, in operation S250, the accelerator 120-1 may perform the bit shift on the accumulated values of the plurality of processing elements PE11 to PE44 based on the minimum exponent difference △eₘᵢₙ. In this case, the minimum exponent difference △eₘᵢₙ may indicate the difference between the new minimum exponent e_{min_new} and the previous minimum exponent e_{min_old}.

Thereafter, in operation S260, the accelerator 120-1 may update the previous minimum exponent e_{min_old} based on the new minimum exponent e_{min_new}. Afterwards, the accelerator 120-1 performs operation S240. In this case, with respect to the fractions of K of data, a bit shift operation will be performed based on the updated previous minimum exponent (for example, new maximum exponent e_{min_new}).

Thereafter, the accelerator 120-1 performs operations of operations S270 to S290, which are similar to the operations of operations S170 to S190 of FIG. 8, so additional description thereof is omitted to avoid redundancy.

As described above, the accelerator 120-1 may perform the exponent alignment on K of data for the purpose of performing the accumulation operation on the plurality of data. In this case, the accelerator 120-1 may perform exponent alignment based on the maximum exponent or the minimum exponent. However, the scope of the present disclosure is not limited thereto. For example, the accelerator 120-1 may perform the exponent alignment based on the maximum value or the minimum value among the absolute values of the exponents of the plurality of data or K of data.

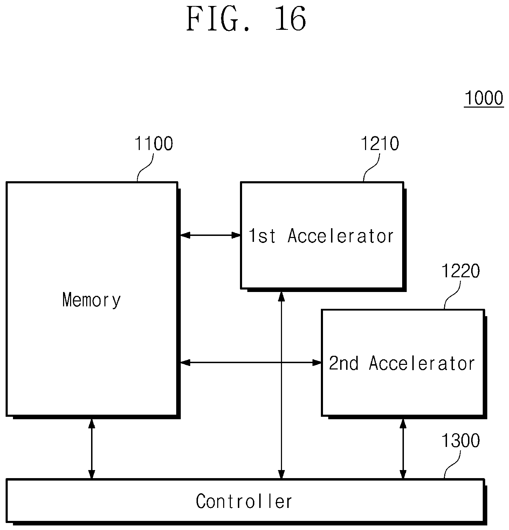

FIG. 16 is a block diagram illustrating a system according to some example embodiments of the present disclosure. Referring to FIG. 16, a system 1000 may include a memory 1100, a first accelerator 1210, a second accelerator 1220, and a controller 1300. The memory 1100 and the controller 1300 are similar to those described with reference to FIG. 1, and thus, additional description will be omitted to avoid redundancy.

The system 1000 may be dedicated hardware configured to perform processing of artificial intelligence models. In some example embodiments, the first accelerator 1210 and the second accelerator 1220 of the system 1000 may perform operations in parallel to process a large artificial intelligence model. For example, the first accelerator 1210 and the second accelerator 1220 may process the large artificial intelligence model through data parallelism, model parallelism, or tensor parallelism. In some example embodiments, the first accelerator 1210 and the second accelerator 1220 may operate based on the operation method or calculation method described with reference to FIGS. 1 to 15.

According to some example embodiments of the present disclosure, an accelerator performing an accumulation operation on floating point type data with improved reliability and improved performance and a method of operating the accelerator are provided.

As described herein, any electronic devices and/or portions thereof according to any of the example embodiments may include, may be included in, and/or may be implemented by one or more instances of processing circuitry such as hardware including logic circuits; a hardware/software combination such as a processor executing software; or any combination thereof. For example, the processing circuitry more specifically may include, but is not limited to, a central processing unit (CPU), an arithmetic logic unit (ALU), a graphics processing unit (GPU), an application processor (AP), a digital signal processor (DSP), a microcomputer, a field programmable gate array (FPGA), and programmable logic unit, a microprocessor, application-specific integrated circuit (ASIC), a neural network processing unit (NPU), an Electronic Control Unit (ECU), an Image Signal Processor (ISP), and the like. In some example embodiments, the processing circuitry may include a non-transitory computer readable storage device (e.g., a memory), for example a DRAM device, storing a program of instructions, and a processor (e.g., CPU) configured to execute the program of instructions to implement the functionality and/or methods performed by some or all of any devices, systems, modules, units, controllers, circuits, architectures, and/or portions thereof according to any of the example embodiments, and/or any portions thereof.

Embodiments are set out in the following Clauses:
Clause 1. An accelerator configured to perform an accumulation operation on a plurality of data, the accelerator comprising:
   a unified buffer unit configured to store the plurality of data;
   a pre-alignment unit configured to load at least two of first data among the plurality of data, to find a first maximum exponent, which is a maximum value among exponents of the at least two of first data, to perform a bit shift on fractions of the at least two of first data based on the first maximum exponent and a previous maximum exponent to generate first aligned fractions;
   a plurality of processing elements configured to generate an aligned accumulated value by performing a bit shift on the previous accumulated value based on a previous maximum exponent and the first maximum exponent, and to perform an accumulation operation on the aligned accumulated value and the first fractions; and
   a normalization unit configured to generate an output value by normalizing operation results of the plurality of processing elements based on the first maximum exponent,
   each of the plurality of data being a floating point type.
Clause 2. The accelerator of Clause 1, wherein the pre-alignment unit includes:
   a maximum exponent finder configured to find the first maximum exponent among the exponents of the at least two of first data;
   a previous maximum exponent store configured to store the previous maximum exponent;
   a maximum exponent determiner configured to determine a maximum exponent based on the previous maximum exponent and the first maximum exponent;
   a maximum exponent subtractor configured to generate, based on the first maximum exponent being greater than the previous maximum exponent, a maximum exponent difference, which is a difference between the first maximum exponent and the previous maximum exponent; and
   a plurality of converters configured to generate first aligned fractions by performing a bit shift on the fractions of the at least two of first data based on the determined maximum exponent.
Clause 3. The accelerator of Clause 2, wherein each of the plurality of processing elements includes:
   an accumulation register configured to store a previous accumulation value;
   a bit shifter configured to perform a bit shift on the previous accumulated value stored in the accumulation register based on the maximum exponent difference; and
   an adder configured to perform an addition operation on at least one of the first aligned fractions and an output of the accumulation register, and
   wherein a result of the addition operation is stored again in the accumulation register.
Clause 4. The accelerator of Clause 3, wherein the adder is an integer adder.
Clause 5. The accelerator of Clause 3 or Clause 4, wherein the bit shifter performs the bit shift on the previous accumulated value in units of 1 bit in synchronization with a period of a clock signal based on the maximum exponent difference, and
   wherein each of the plurality of processing elements further includes:
   a stall control circuit configured to stall the at least one of the first aligned fractions from being input to the adder based on the maximum exponent difference while the bit shifter performs the bit shift.
Clause 6. The accelerator of any preceding Clause, wherein the output value is stored in the unified buffer unit.
Clause 7. A method of operating an accelerator configured to perform an accumulation operation on a plurality of data, the method comprising:
   generating a Oth maximum exponent and a Oth accumulated value by performing the accumulation operation on at least two of data among the plurality of data;
   based on a first exponent of first data among the plurality of data being greater than the Oth maximum exponent, performing a bit shift on the Oth accumulated value based on the first exponent and the Oth maximum exponent to generate a Oth aligned accumulated value; and
   generating a first accumulated value by performing an accumulation operation on a first fraction of the first data and the Oth aligned accumulated value,
   each of the plurality of data being a floating point type.
Clause 8. The method of Clause 7, further comprising:
   based on a second exponent of second data among the plurality of data being not greater than the first exponent, generating a second aligned fraction by performing a bit shift on second fraction of the second data based on the first exponent; and
   generating a second accumulated value by performing an accumulation operation on the second aligned fraction and the first accumulated value.
Clause 9. The method of Clause 7 or Clause 8, wherein the bit shift on the Oth accumulated value is performed in units of 1 bit in synchronization with a clock signal.

The above descriptions are example embodiments for carrying out the present disclosure. Example embodiments in which a design is changed simply or which are easily changed may be included in the present disclosure as well as some example embodiments described above. In addition, technologies that are easily changed and implemented by using the above example embodiments may be included in the present disclosure. Therefore, the scope of the present disclosure should not be limited to the above-described example embodiments and should be defined by not only the claims to be described later, but also those equivalent to the claims of the present disclosure.

## Claims

1. A method of operating an accelerator configured to perform an accumulation operation on a plurality of data, the method comprising:
loading at least two of first data among the plurality of data;
finding a first exponent, which is a maximum value among exponents of the at least two of first data;
generating aligned first fractions by performing a bit shift on first fractions of the at least two of first data based on the first exponent, and generating a first accumulated value by performing an accumulation operation on the aligned first fractions;
loading at least two of second data among the plurality of data;
finding a second exponent, which is a maximum value among exponents of the at least two of second data, and the second exponent being greater than the first exponent; and
generating a first aligned accumulated value by performing a bit shift on the first accumulated value based on a difference between the second exponent and the first exponent, generating aligned second fractions by performing a bit shift on second fractions of the at least two of second data, and generating a second accumulated value by performing an accumulation operation on the aligned second fractions and the first aligned accumulated value,
each of the plurality of data being a floating point type.

2. The method of claim 1, further comprising:
storing information about the first exponent as a maximum exponent.

3. The method of claim 2, further comprising:
updating the maximum exponent to the second exponent based on the second exponent being greater than the first exponent.

4. The method of any preceding claim, further comprising:
loading at least two of third data among the plurality of data;
finding a third exponent, which is a maximum value among exponents of the at least two of third data, and the third exponent not being greater than the second exponent; and
generating aligned second fractions by performing a bit shift on third fractions of the at least two of third data based on the third exponent, and generating a third accumulated value by performing an accumulation operation on the aligned second fractions and the second accumulated value.

5. The method of claim 4, further comprising:
generating an output value by performing normalization based on the third accumulated value and the second exponent, and
wherein the output value is of a floating point type.

6. The method of any preceding claim, wherein the accumulation operation on the aligned first fractions and the accumulation operation on the aligned second fractions and the first aligned accumulation value are performed through integer type addition.

7. The method of any preceding claim, wherein the bit shift on the first accumulated value is performed in units of 1 bit in synchronization with a period of a clock signal.

8. The method of claim 7, wherein, based on the bit shift on the first accumulated value being performed, an input of the aligned second fractions is stalled.

9. The method of any preceding claim, wherein the accelerator is configured to perform the accumulation operation on 'N' units of data in parallel, and
each of a number of the at least two of first data and a number of the at least two of second data are less than 'N'.

10. The method of claim 9, wherein a number of the plurality of data is greater than 'N', and after the accumulation operation on the plurality of data is completed, the accelerator performs normalization on a result of the accumulation operation.

11. The method of any preceding claim, wherein the accelerator is configured to process an artificial intelligence model.

12. An accelerator configured to perform an accumulation operation on a plurality of data, the accelerator comprising:
a unified buffer unit configured to store the plurality of data;
a pre-alignment unit configured to load at least two of first data among the plurality of data, to find a first maximum exponent, which is a maximum value among exponents of the at least two of first data, to perform a bit shift on fractions of the at least two of first data based on the first maximum exponent and a previous maximum exponent to generate first aligned fractions;
a plurality of processing elements configured to generate an aligned accumulated value by performing a bit shift on the previous accumulated value based on a previous maximum exponent and the first maximum exponent, and to perform an accumulation operation on the aligned accumulated value and the first fractions; and
a normalization unit configured to generate an output value by normalizing operation results of the plurality of processing elements based on the first maximum exponent,
each of the plurality of data being a floating point type.

13. The accelerator of claim 12, wherein the pre-alignment unit includes:
a maximum exponent finder configured to find the first maximum exponent among the exponents of the at least two of first data;
a previous maximum exponent store configured to store the previous maximum exponent;
a maximum exponent determiner configured to determine a maximum exponent based on the previous maximum exponent and the first maximum exponent;
a maximum exponent subtractor configured to generate, based on the first maximum exponent being greater than the previous maximum exponent, a maximum exponent difference, which is a difference between the first maximum exponent and the previous maximum exponent; and
a plurality of converters configured to generate first aligned fractions by performing a bit shift on the fractions of the at least two of first data based on the determined maximum exponent.

14. The accelerator of claim 13, wherein each of the plurality of processing elements includes:
an accumulation register configured to store a previous accumulation value;
a bit shifter configured to perform a bit shift on the previous accumulated value stored in the accumulation register based on the maximum exponent difference; and
an adder configured to perform an addition operation on at least one of the first aligned fractions and an output of the accumulation register, and
wherein a result of the addition operation is stored again in the accumulation register.

15. The accelerator of claim 14, wherein the adder is an integer adder.
